# EUROPÄISCHE PATENTSCHRIFT

(11) **EP 3 908 226 B1**
(45) Veröffentlichungstag und Bekanntmachung des Hinweises auf die Patenterteilung: **23.08.2023**
(21) Anmeldenummer: 20702783.0
(22) Anmeldetag: 30.01.2020
(51) Int. Cl.: A61C 13/00, B29C 64/188, B29C 64/35

(54) **VERFAHREN ZUR HERSTELLUNG EINES BAUTEILS MIT HILFE EINES DREIDIMENSIONALEN DRUCKVERFAHRENS**
METHOD FOR PRODUCING A COMPONENT USING A THREE-DIMENSIONAL PRINTING METHOD
PROCÉDÉ DE FABRICATION D'UN COMPOSANT À L'AIDE D'UN PROCÉDÉ D'IMPRESSION EN TROIS DIMENSIONS

(30) Priorität: 30.01.2019 DE 102019102359
(43) Veröffentlichungstag der Anmeldung: 17.11.2021
(73) Patentinhaber: Dekema Dental-Keramiköfen GmbH, 83395 Freilassing (DE)
(72) Erfinder: MILLER, Michael, 80333 München (DE); WENDT, Alexander, 83395 Freilassing (DE); WEIST, Marius, 41372 Niederkrüchten (DE); FÜRLE, Marco, 83395 Freilassing (DE); MILLER, Stephan, 833278 Traunstein (DE)
(74) Vertreter: Manitz Finsterwald Patent- und Rechtsanwaltspartnerschaft mbB
(86) Internationale Anmeldenummer: PCT/EP2020/052210
(87) Internationale Veröffentlichungsnummer: WO 2020/157158

(56) Entgegenhaltungen:
- EP-A1- 3 376 413
- CN-A- 109 047 171
- US-A1- 2018 229 432

## Beschreibung

Die vorliegende Erfindung betrifft ein Verfahren zum Herstellen eines Bauteils mithilfe eines dreidimensionalen Druckverfahrens.

Derartige Druckverfahren finden aufgrund zunehmend präzise werdender 3D-Drucker breiten Anklang in Bereichen, in denen Bauteile individuell geformt werden müssen. Bedarf für individuell gefertigte Bauteile besteht insbesondere im Dentalbereich, da ein Zahnersatz oder Zahnteilersatz an die jeweiligen Bedürfnisse jedes Patienten angepasst werden muss.

Die Herstellung von Zahnersatz oder Zahnteilersatz ist vergleichsweise aufwendig, da hohe Qualitätsstandards eingehalten werden müssen und eine präzise Fertigung derartiger Bauteile entscheidend ist. Gleichzeitig soll sie möglichst effizient und kostengünstig sein. Beispielhaft wird im Folgenden ein möglicher Herstellungsprozess von Zahnersatz oder Zahnteilersatz beschrieben.

In einem ersten Schritt werden digitale Daten des Gebisses des Patienten generiert. Diese Daten können auf direktem Wege durch einen intraoralen Scanprozess erfasst werden. Es ist jedoch auch möglich, zunächst einen negativen Abdruck des Gebisses zu erstellen und diesen zur Herstellung eines positiven Modells des Gebisses zu nutzen. Dieses positive Modell kann dann gescannt werden. Die digitalen Daten des Gebisses bilden die Basis zur digitalen Planung des herzustellenden Zahnersatzes bzw. Zahnteilersatzes. Die durch die digitale Planung erhaltenen Daten werden dann zur Herstellung von Modellen verwendet, die wiederum zur Bereitstellung von Negativformen genutzt werden, die als "verlorene Formen" dienen. Die Negativformen werden nach einem Ausbrennen der Modelle mit einem Rohmaterial befüllt, aus dem der Zahnersatz oder Zahnteilersatz hergestellt werden soll. Durch einen Brenn-/Pressprozess wird das Rohmaterial in den Negativformen ausgehärtet. Nach der Entfernung der Negativformen liegen schließlich die grundsätzlich fertigen Zahnersatz- oder Zahnteilersatzkomponenten vor, die bei Bedarf anschließend noch nachbearbeitet werden können.

Es wurde erkannt, dass die Entwicklung von 3D-Druckern inzwischen so weit fortgeschritten ist, dass sich diese im Prinzip zur Erzeugung der Modelle der zu fertigenden Bauteile eignen sollten. Bei Verfahren, bei denen ein flüssiges Basismaterial schrittweise lokal verfestigt wird, um das Modell zu erzeugen, so wie etwa bei der Stereolithographie oder dem CLIP-Verfahren (Continuous Liquid Interface Production), besteht jedoch grundsätzlich das Problem, dass Reste nicht ausgehärteten Basismaterials an dem Modell anhaften. Diese Reste können bei weiteren Verfahrensschritten zu einem Verzug des Modells und/oder anderen Defekten führen, beispielsweise weil das Modell ungleichmäßig aushärtet und/oder die Reste verdampfen, wodurch lokal ein Überdruck in dem Modell entsteht. Besonders problematisch ist dies bei komplexen Modellgeometrien mit Hinterschnitten und/oder Hohlräumen, da sich dort nicht unerhebliche Mengen des flüssigen Basismaterials ansammeln können.

Die US 2018/0229432 A1 offenbart ein Verfahren mit den Merkmalen des Oberbegriffs des Anspruchs 1. Die EP 3 376 413 A1 betrifft ein Verfahren zur Herstellung eines Bauteils mit zumindest einem Hohlraum mittels pulverbasiertem 3D-Druck.

Es ist daher eine Aufgabe der vorliegenden Erfindung, hier Abhilfe zu schaffen und ein verbessertes Verfahren zur Herstellung von Bauteilen, insbesondere von Bauteilen im Bereich der Dentaltechnik, anzugeben.

Diese Aufgabe wird mit den Merkmalen der Ansprüche 1 und 10 gelöst.

Erfindungsgemäß wird zunächst ein Basiselement bereitgestellt. Das Bauteil wird dann in einem Flüssigkeitsbad derart auf dem Basiselement gedruckt, dass das Bauteil nach einem Abschluss des Druckens einen Hohlraum aufweist. Der Begriff "Hohlraum" ist dabei breit zu verstehen. Ein Hohlraum kann beispielsweise eine abgeschlossene Kavität oder teilweise offen sein. Um sich in dem Hohlraum ansammelnde Reste der Flüssigkeit des Bads und/oder von überschüssigem Druckmaterial - also dem Material, aus dem das Bauteil gedruckt wird - entfernen zu können, werden zumindest zwei Kanäle bereitgestellt, die zumindest nach dem Abschluss des Druckens eine Fluidverbindung zwischen dem Hohlraum und der Umgebung herstellen. Dies ermöglicht es, nicht nur unerwünschtes Material aus dem Hohlraum zu spülen, sondern auch einen Druckausgleich zwischen dem Hohlraum und der Umgebung herbeizuführen, um unerwünschte Verformungen des Bauteils während oder nach dessen Herstellung zu vermeiden.

Bei der Ausgestaltung und Dimensionierung der Kanäle können die Eigenschaften des Druckmaterials und/oder der Flüssigkeit, die das Bad bildet, und/oder die Ausgestaltung und Dimensionierung des Bauteils und/oder die Eigenschaften eines Fluids zur Spülung oder Trocknung des Hohlraums (beispielsweise ein Gas oder eine Flüssigkeit) berücksichtigt werden, um den Herstellungsprozess zu optimieren. Ein unter anderem wichtiger Parameter ist dabei die Viskosität der bei dem Herstellungsprozess verwendeten Flüssigkeiten oder Gase. Maßgebliche Parameter, die die Ausgestaltung und Dimensionierung der Kanäle definieren, sind beispielsweise seine Länge, sein Durchmesser, seine Formgebung in seiner Längserstreckung, seine Querschnittsform und/oder seine Wandstärke. Das Einbringen des Fluids in den Hohlraum durch zumindest einen der Kanäle kann mittels Überdruck erfolgen. Es ist aber auch denkbar, Fluide durch zumindest einen der Kanäle aus dem Hohlraum zu saugen.

Weitere Ausführungsformen der Erfindung sind in der Beschreibung, den Zeichnungen und den beigefügten Figuren angegeben.

Gemäß einer Ausführungsform des Verfahrens ist der Kanal zumindest abschnittsweise durch das Basiselement begrenzt. D. h. das Basiselement bildet zumindest abschnittsweise eine Wandung des Kanals.

Der Kanal kann zumindest abschnittsweise in das Basiselement integriert sein. Insbesondere ist er zumindest abschnittsweise einstückig mit diesem ausgebildet. Beispielsweise ist der Kanal (teilweise) in das Basiselement integriert. Er kann beispielsweise eine Bohrung in dem Basiselement umfassen. Es ist auch möglich, mehrere Bohrungen in dem Basiselemente vorzusehen, die derart angeordnet sind, dass auch bei der Herstellung der verschiedensten Bauteile gleichsam "automatisch" zumindest eine Verbindung zwischen dem Hohlraum und der Umgebung hergestellt wird.

Es ist auch denkbar, zumindest einen der Kanäle (teilweise) separat zu fertigen und ihn an dem Basiselement zu befestigen, sodass er bei dem Druckprozess zumindest abschnittsweise in das Bauteil integriert wird. Bildlich gesprochen kann man sich auch ein zumindest abschnittsweises "Umdrucken" des Kanals vorstellen. Der Kanal kann aus dem gleichem oder einem anderem Material als das Bauteil und/oder das Basiselement bestehen und/oder mehr als ein Material umfassen.

Gemäß einer weiteren Ausführungsform wird zumindest einen der Kanäle zumindest teilweise, bevorzugt vollständig bei dem Drucken des Bauteils erzeugt wird, insbesondere durch den Druckprozess. Dies vereinfacht die Herstellung des Bauteils, da der Kanal dann zumindest teilweise schon bei der Erstellung eines digitalen Modells des Bauteils "mitgeplant" und entsprechend der eingesetzten Druckmaterialien und/oder der Eigenschaften des Flüssigkeitsbads und/oder des Spül-/Trocknungsfluids optimiert werden kann.

Der Druckprozess kann so gestaltet sein, dass der Hohlraum nach dem Abschluss des Druckens zumindest abschnittsweise durch das Basiselement begrenzt ist. Beispielsweise ist das Basiselement eine Platte, auf die ein zylinderförmiges Bauteil gedruckt wird, dass an der dem Basiselement abgewandten Seite verschlossen ist.

Zumindest einer der Kanäle kann zumindest einen gewundenen, gekrümmten und/oder schräg zu einer Längsachse des Kanals verlaufenden Abschnitt aufweisen. Bei dieser Bauweise kann ein vergleichsweise niedrigviskoses Fluid unproblematisch in den Hohlraum eingebracht oder aus diesem entfernt werden, während gleichzeitig das Eindringen eines vergleichsweise hochviskosen Fluids zuverlässig verhindert wird. Die Ausgestaltung des gewundenen, gekrümmten und/oder schräg zu einer Längsachse des Kanals verlaufenden Abschnitts (eine Kombination von zwei oder mehreren solcher Abschnitte ist ebenfalls möglich) kann an die Eigenschaften der bei dem Herstellungsprozess des Bauteils verwendeten Fluide und/oder die Eigenschaften von Materialien, mit denen das Bauteil später in Kontakt kommt, angepasst sein. Vergleichsweise niedrigviskose Fluide sind beispielsweise der flüssige Kunststoff, das dem das Bauteil hergestellt wird, und/oder ein Spülfluid. Ein Beispiel für ein hochviskoses Material wäre ein Einbettmittel, das zum Einbetten des Bauteils zur Herstellung einer verlorenen Form verwendet wird.

Grundsätzlich kann zumindest einer der Kanäle einen konstanten Querschnitt aufweisen. Zur Optimierung seiner Durchlässigkeitseigenschaften kann ein Querschnitt des Kanals lokal variieren.

Gemäß einer weiteren Ausführungsform des Verfahrens weist ein dem Hohlraum abgewandtes Ende zumindest eines der Kanäle eine Schnittstelle zur Verbindung des Kanals mit einem separaten Fluidsystem auf, insbesondere wobei die Schnittstelle durch den Druckprozess erzeugt wird. Die Schnittstelle dient beispielsweise zum Anschluss eines Schlauchs, einer Düse o.ä. an den Kanal, um ein Spülfluid in den Hohlraum einzubringen und/oder diesen mit einem Über- oder Unterdruck zu beaufschlagen. Zur Vereinfachung der Verbindung des Kanals mit dem Flusssystem kann die Schnittstelle mechanische Kopplungselemente aufweisen, beispielsweise geeignet geformte Nuten, Vorsprünge o. ä..

Im Inneren des Hohlraums können zumindest eine Stützstruktur zur Erhöhung der Stabilität des Bauteils und/oder zumindest eine Leitstruktur zum selektiven Leiten von Fluid vorgesehen sein. Insbesondere werden die Stützstruktur und/oder die Leitstruktur bei dem und/oder durch das Drucken des Bauteils erzeugt. Die Leitstruktur kann insbesondere derart ausgestaltet sein, dass sie das Spülen und/oder das Trocknen des Bauteils unterstützt, indem die dabei verwendeten Fluide den kritischen Bereichen zugeführt und/oder von diesen weg geleitet werden und/oder zu dem hohlraumseitigen Ende des Kanals hin geleitet werden. Es kann vorgesehen sein, dass die Stützstruktur und/oder die Leitstruktur mit zumindest einem der Kanäle in Verbindung stehen.

Es sind zumindest zwei Kanäle vorgesehen, die mit dem Hohlraum in Fluidverbindung stehen, wobei die Kanäle in Umfangsrichtung des Bauteils verteilt, bevorzugt relativ zu dem Bauteil einander gegenüberliegend angeordnet sind und/oder wobei die Kanäle in einer Druckrichtung des Bauteils gesehen in einer Ebene oder in unterschiedlichen Ebenen angeordnet sind. Die Anzahl und/oder die räumliche Anordnung der Kanäle werden insbesondere so gewählt, dass das Spülen und/oder Trocknen des Hohlraums optimiert wird. Beispielsweise können für das Spülfluid zumindest ein Eingangskanal und ein Ausgangskanal vorgesehen sein, um ein Durchspülen des Hohlraums zu ermöglichen.

Insbesondere kommt das erfindungsgemäße Verfahren in Verbindung mit einem Stereolithographieverfahren, ein CLIP-Verfahren (Continuous Liquid Interface Production) und/oder ein Hybridverfahren zum Einsatz.

Gemäß einer Ausführungsform des Verfahrens wird die in dem Hohlraum vorhandene Flüssigkeit des Flüssigkeitsbads nach dem Drucken durch zumindest einen der Kanäle entfernt. Nach dem Drucken kann durch den Kanal ein Spülfluid, z.B. eine Spülflüssigkeit und/oder ein Spülgas, in den Hohlraum eingebracht werden. Das Spülfluid kann auch eine reinigende Wirkung haben. Als vorteilhaft hat sich die Verwendung eines mit Alkoholdampf gesättigten Gases oder Gasgemisches (z.B. Luft) erwiesen. Das Spülen des Bauteils bzw. des Hohlraums kann beliebig oft wiederholt werden. Dabei kann es auch vorgesehen sein, das Spülfluid durch Absaugen aus dem Hohlraum zu entfernen.

Nach dem Spülen des Bauteils kann dieses getrocknet werden. Gemäß einer vorteilhaften Variante erfolgt das Trocknen durch das Einbringen eines "trockenen" Gases oder Gasgemisches in den Hohlraum. Dabei kann ein über die Umgebungstemperatur erwärmtes Gas oder Gasgemisch zum Einsatz gelangen. Es versteht sich, dass das Spülen und Trocknen ineinander übergehen kann oder gleichzeitig erfolgen kann.

Nach einem Entfernen der Flüssigkeit aus dem Hohlraum und/oder nach dem Spülen und/oder Trocknen des Hohlraums oder des Bauteils kann das Bauteil gehärtet werden, insbesondere mittels Strahlung (z.B. UV-Strahlung) und/oder Wärmeeintrag. Das Trocknen und Härten kann auch ineinander übergehen oder gleichzeitig erfolgen.

Die Kanäle und/oder das Basiselement können nach dem Drucken, nach dem Spülen, nach dem Trocknen oder nach dem Aushärten des Bauteils von dem Bauteil abgetrennt werden. Wann dies erfolgt, kann davon abhängen, ob die Kanäle und/oder das Basiselement für einen nachfolgenden Verfahrensschritt noch gebraucht wird oder nicht. Um das Abtrennen zu erleichtern, können an dem Bauteil, dem Basiselement und/oder den Kanälen Solltrennstellen, beispielsweise bewusst vorgesehene Schwächezonen, vorgesehen sein. Insbesondere werden diese Solltrennstellen bei dem Druckprozess erzeugt.

Die vorliegende Erfindung betrifft ferner ein System mit einer Druckvorrichtung zum Drucken eines Bauteils in einem Flüssigkeitsbad gemäß einem Verfahren nach zumindest einem der vorstehenden Ansprüche.

Erfindungsgemäß wird zudem ein System mit einer Spülvorrichtung zum Spülen eines Bauteils vorgeschlagen, das gemäß einem Verfahren nach einer der vorstehend beschriebenen Ausführungsformen hergestellt wurde. Die Spülvorrichtung kann eine Spüleinrichtung aufweisen, die mit zumindest einem der Kanäle des Bauteils koppelbar ist und mit der eine Spülflüssigkeit und/oder ein Spülgas in den Hohlraum einbringbar ist, insbesondere wobei die Spülflüssigkeit und/oder das Spülgas druckbeaufschlagt in den Hohlraum einbringbar sind und/oder aus diesem absaugbar sind. Das Spülen kann auch ein Trocknen des Bauteils umfassen.

Gemäß einer Ausführungsform des Systems umfasst die Spülvorrichtung eine Spülkammer, in der das Bauteil anordbar ist, wobei die Spülkammer zumindest ein Spülelement, insbesondere eine Düse, zur Beaufschlagung des Bauteils mit einer Spülflüssigkeit und/oder mit einem Spülgas aufweist. So kann das Bauteil auch von außen gespült, gereinigt und/oder getrocknet werden.

Grundsätzlich ist es möglich, eine separate Trocknungsvorrichtung zum Trocknen des Bauteils vorzusehen. Eine kompaktere Bauform des Systems ergibt sich jedoch, wenn die Trocknungsvorrichtung in die Spülvorrichtung integriert ist.

Gleiches gilt für eine optional vorgesehene Aushärtevorrichtung zum Härten des Bauteils. Die Aushärtevorrichtung kann in die Spülvorrichtung oder die Trocknungsvorrichtung integriert sein.

Insbesondere ist eine Fixierungsvorrichtung zum lagegenauen Fixieren des Basiselements in der Druckvorrichtung, der Spülvorrichtung, der Trocknungsvorrichtung und/oder der Aushärtevorrichtung vorgesehen. Gemäß einer vorteilhaften Ausführungsform sind die Fixierungsvorrichtungen der einzelnen vorstehend genannten Vorrichtungen insoweit gleich oder kompatibel, dass das Basiselement problemlos in allen Vorrichtungen jeweils in einer bekannten Position fixierbar ist. Zu diesem Zweck können geeignete mechanische Kodierungen und/oder Markierungen an dem Basiselement einerseits und den vorstehend genannten Vorrichtungen andererseits vorgesehen sein.

Die vorliegende Erfindung wird nachfolgend rein beispielhaft anhand vorteilhafter Ausführungsformen unter Bezugnahme auf die beigefügten Zeichnungen erläutert.

Es zeigen:
- Fig. 1: ein anhand digitaler Daten mittels 3D-Druck hergestelltes Modell,
- Fig. 2: das Einbetten des Modells,
- Fig. 3 und 4: eine erste Ausführungsform der vorliegenden Erfindung,
- Fig. 5 und 6: eine zweite Ausführungsform der vorliegenden Erfindung,
- Fig. 7 und 8: eine dritte Ausführungsform der vorliegenden Erfindung,
- Fig. 9 und 10: eine vierte Ausführungsform der vorliegenden Erfindung,
- Fig. 11: eine fünfte Ausführungsform der vorliegenden Erfindung,
- Fig. 12 bis 14: eine sechste Ausführungsform der vorliegenden Erfindung,
- Fig. 15 bis 17: eine siebte Ausführungsform der vorliegenden Erfindung und
- Fig. 18 bis 20: eines Systems gemäß einer Ausführungsform der vorliegenden Erfindung.

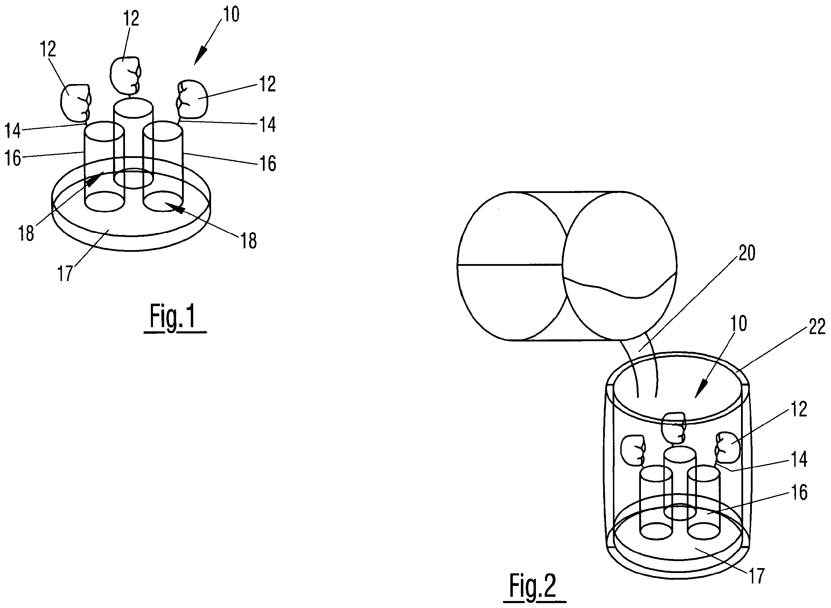

Fig. 1 zeigt beispielhaft ein Modell 10, das zur Herstellung von Zahnersatz oder Zahnteilersatz genutzt wird. Im vorliegenden Beispiel umfasst es drei Zahnersatzkomponenten 12, die jeweils mittels Stegen 14 auf Hohlzylindern 16 angeordnet sind. Das Modell 10 wird mittels 3D-Druck auf einem Basiselement 17 gedruckt. Das Basiselement 17 ist vorliegend eine Platte. Es sind jedoch beliebige andere Geometrien des Basiselements 17 denkbar.

Ein geeignetes Druckverfahren ist beispielsweise die Stereolithographie, bei der ein lichtaushärtender flüssiger Kunststoff von einem Laser in dünnen Schichten ausgehärtet wird. Dieser Prozess läuft in einem Bad des Kunststoffs ab. Nach dem Aushärten jeder Schicht durch die Bestrahlung mit dem Laser wird das herzustellende Bauteil um eine Schichtdicke abgesenkt. Der über dem Bauteil liegende flüssige Kunststoff wird dann durch einen Wischer gleichmäßig verteilt. Anschließend wird der flüssige Kunststoff wieder mit Laserlicht bestrahlt, um die nächste Bauteilschicht zu bilden. Nach und nach entsteht so das dreidimensionale Modell 10.

Bei dem CLIP-Verfahren (Continuous Liquid Interface Production) wird das Bauteil kontinuierlich gefertigt. Auch hier liegt ein Bad eines lichtaushärtenden Kunststoffs vor. Allerdings wird bei diesem Verfahren ein Laserstrahl durch einen für die verwendete Wellenlänge transparenten Boden des Behälters des Kunststoffbads gelenkt und präzise dort fokussiert, wo der Kunststoff aushärten soll. Der zu druckende Gegenstand wird von einer Plattform langsam aus dem Kunststoffbad gezogen, sodass der flüssige Kunststoff stets in den dünnen Zwischenraum zwischen dem Gegenstand und dem Boden nachfließen kann. Der Boden ist so ausgestaltet, dass der aushärtende Kunststoff nicht daran anhaftet.

Varianten und Verfeinerungen dieser Verfahren sind grundsätzlich bekannt. Neben den vorgenannten Verfahren sind auch andere 3D-Druckverfahren (auch Hybridverfahren) einsetzbar.

Bei komplexen Modellgeometrien besteht jedoch das Problem, dass sich flüssiger Kunststoff in Hinterschneidungen und/oder Hohlräumen des Modells ansammeln kann. Wie eingangs beschrieben worden ist, kann dies zu einem Verzug und/oder anderen Schädigungen des Modells führen. Im Beispiel der Fig. 1 sammelt sich Flüssigkeit im Inneren der Hohlzylindern 16 an, die nach dem Abschluss des Druckprozesses nicht entweichen kann. Dies kann beispielsweise dazu führen, dass sich eine Druckdifferenz zwischen einem jeweiligen Innen- oder Hohlraum 18 der Zylinder 16 und dem Außenraum ausbildet (z.B. durch ein Ausgasen des flüssigen Kunststoffs), die sich negativ auf dessen Form auswirkt.

Fig. 2 zeigt den Schritt eines Einbettens des Modells 10 mittels eines Einbettmittels 20. Auf die Platte 17 wurde zu diesem Zweck ein Gehäusezylinder 22 gesetzt. Nach dem Einbetten des Modells 10 und dem Aushärten des Einbettmittels 20 wird das gedruckte Modell 10 ausgebrannt, sodass sich in dem Einbettmittel 20 eine hohle Negativform des Modells 10 ausbildet. Die Negativform wird nun mit einem Rohmaterial für die herzustellenden Zahnersatzkomponenten 12 (teilweise) gefüllt und anschließend gebrannt. Während dem Brennen kann optional eine Druckbeaufschlagung des Rohmaterials vorgesehen sein, die durch Druckstempel erzeugt wird. Diese sind beweglich in den zylinderförmigen Hohlräumen angeordnet, die durch die Hohlzylinder 16 des Modells 10 erzeugt wurden.

Die vorstehend beschriebenen, unerwünschten Flüssigkeitsansammlungen und die damit einhergehenden Probleme haben zu dem Vorurteil geführt, dass 3D-Druckverfahren zumindest im Dentalbereich, in dem es auf besondere Präzision ankommt, problematisch sein können. Durch die vorliegende Erfindung konnte hier Abhilfe geschaffen werden.

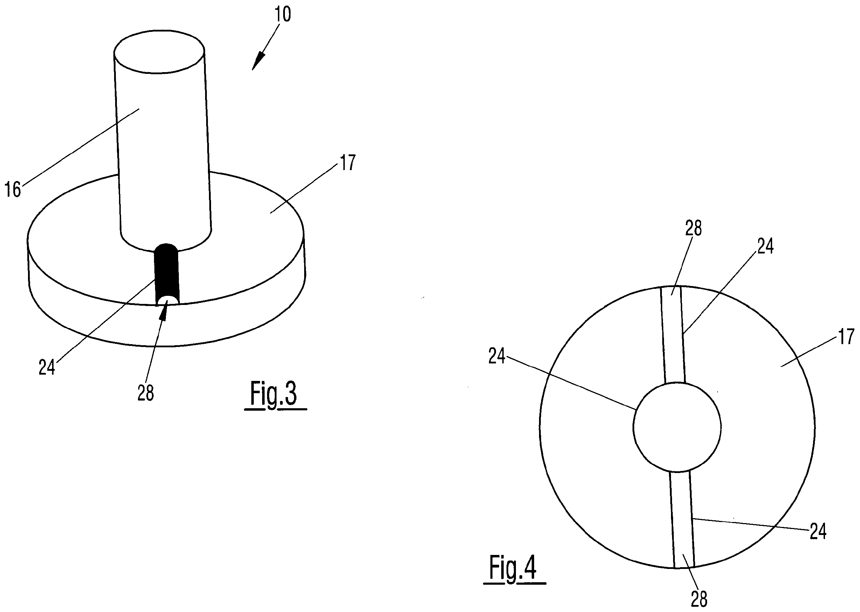

Fig. 3 zeigt einen auf das Basiselement 17 gedruckten Hohlzylinder 16 (die Komponenten 12 und Stege 14 wurden der Einfachheit halber weggelassen). Um Flüssigkeit aus dem Inneren des Zylinders 16 entfernen zu können, ist ein Kanal 24 vorgesehen, dessen Inneres mit dem Hohlraum 18 des Zylinders 16 in Kontakt steht. Dadurch kann Flüssigkeit aus dem Zylinder 16 ablaufen. Der Kanal 24 kann auch dazu genutzt werden, den Hohlraum 18 zu spülen, beispielsweise mit einer Flüssigkeit und/oder mit einem Gas. Der Kanal 24 ermöglicht auch einen Druckausgleich und/oder eine aktive oder passive Trocknung des Hohlraums 1. Eine Fluidbeaufschlagung des Hohlraums 18 kann bei Bedarf mit einem (geringen) Überdruck erfolgen. Auch eine Unterdruckbeaufschlagung (Fluidabsaugung) ist denkbar.

Fig. 4 zeigt eine Draufsicht, sodass zu erkennen ist, dass zwei Kanäle 24 vorgesehen sind, die - relativ zu dem Zylinder 16 gesehen - einander gegenüber liegen. Einer der beiden Kanäle 24 kann als Eintrittskanal für ein Spül- oder Trocknungsfluid dienen, während der andere Kanal 24 als Austrittskanal dient. So kann der Hohlraum 18 effizient durchspült werden. Es versteht sich, dass eine beliebige Anzahl von Kanälen 24 vorgesehen sein kann.

In der beispielhaft gezeigten Ausführungsform haben die Kanäle 24 einen halbkreisförmigen Querschnitt. Grundsätzlich sind aber beliebige Querschnittsformen, die bei Bedarf in Längsrichtung der Kanäle 24 auch variieren können, denkbar.

Die Kanäle 24 können durch den Druckprozess gebildet werden und sind insbesondere aus dem gleichen Material gefertigt wie der Zylinder 16. Es ist jedoch auch möglich, dass die Kanäle 24 einstückig mit dem Basiselement 17 ausgebildet und/oder in dieses (teilweise) integriert sind. Die Kanäle 24 werden dann - bildlich gesprochen - von dem Zylinder 16 "umdruckt".

Gemäß einer Variante des Verfahrens werden separate Kanalbauteile - im vorliegenden Beispiel wären es dann zwei rinnenartige Halbschalen - bereitgestellt, die vor dem Druckprozess auf dem Basiselement 17 befestigt werden. Sie können aus dem gleichen Material bestehen, aus dem das Modell 10 gedruckt wird. Die Wahl anderer Materialien ist jedoch auch möglich. Gleiches gilt für Mischformen der vorstehend beschriebenen Varianten.

Die dem Zylinder 16 abgewandten Enden der Kanäle 24 weisen jeweils eine Öffnung 28 auf. Die Kanäle 24 reicht bis zum Rand des Basiselements 17, so dass der Gehäusezylinder 22 die Öffnungen 28 bei einem Einbetten des Modells 10 verschließt und folglich kein Einbettmittel 20 in den Zylinder 16 gelangen kann.

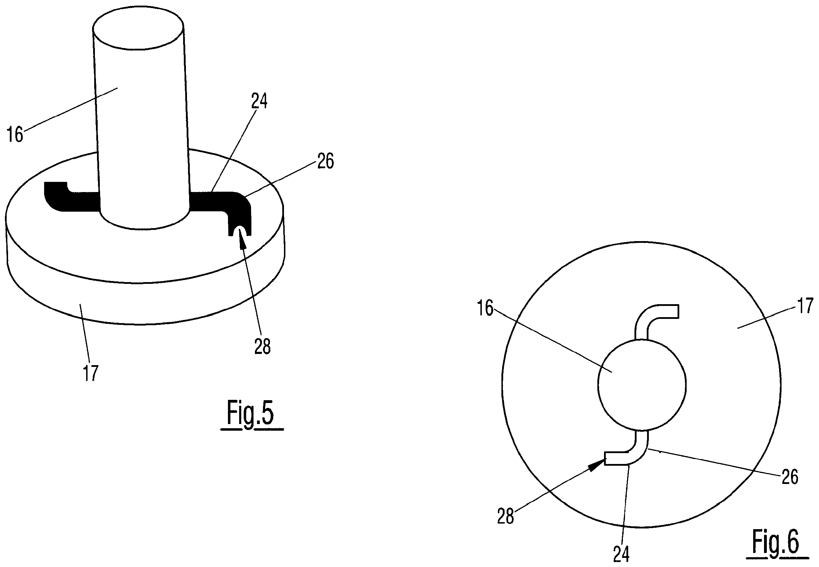

Fig. 5 und 6 zeigen eine weitere Variante der Erfindung. Die Kanäle 24 sind hier nicht durchgehend geradlinig ausgestaltet, sondern weisen in ihrem Verlauf jeweils eine Biegung 26 von etwa 90° auf. Außerdem reichen sie nicht bis zum Rand des Basiselements 17. Damit liegen zwar die Öffnungen 28 der Kanäle 24 beim Einbetten frei. Die Biegungen 26 verhindern jedoch, dass das vergleichsweise hochviskose Einbettmittel 20 in den Hohlraum 18 gelangt. Einem Ausfließen eines niedrigviskoseren Fluids aus dem Hohlraum 18 stehen die Biegungen 26 jedoch nicht entgegen.

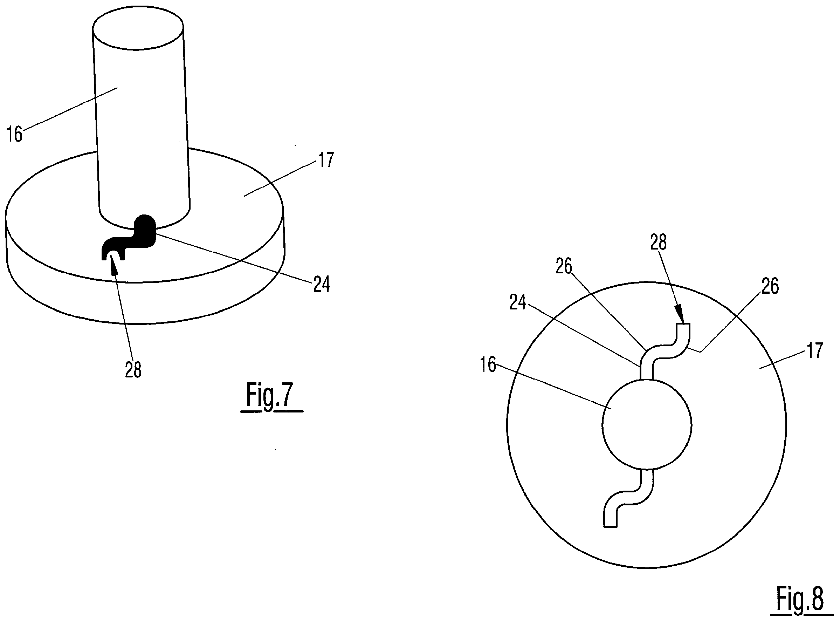

Die Biegungen 26 können beliebige Winkel und/oder Krümmungsradien aufweisen. Es können auch beliebig viele Biegungen 26 vorgesehen sein, wie beispielhaft anhand der in den Fig. 7 und 8 dargestellten Ausführungsform gezeigt ist. Die geometrische Ausgestaltung der Kanäle 24 und/oder deren Anzahl kann an die Eigenschaften der im Herstellungsprozess verwendeten Fluide angepasst werden, sodass die gewünschten Fluide durch die Kanäle 24 treten können, während es anderen Fluide zuverlässig verwehrt wird. Zu Parametern, die die geometrische Ausgestaltung der Kanäle 24 definieren, gehören unter anderem deren Länge, deren Verlauf, deren Querschnittsform (die im Verlauf der Kanäle auch variieren kann) und deren räumliche Anordnung.

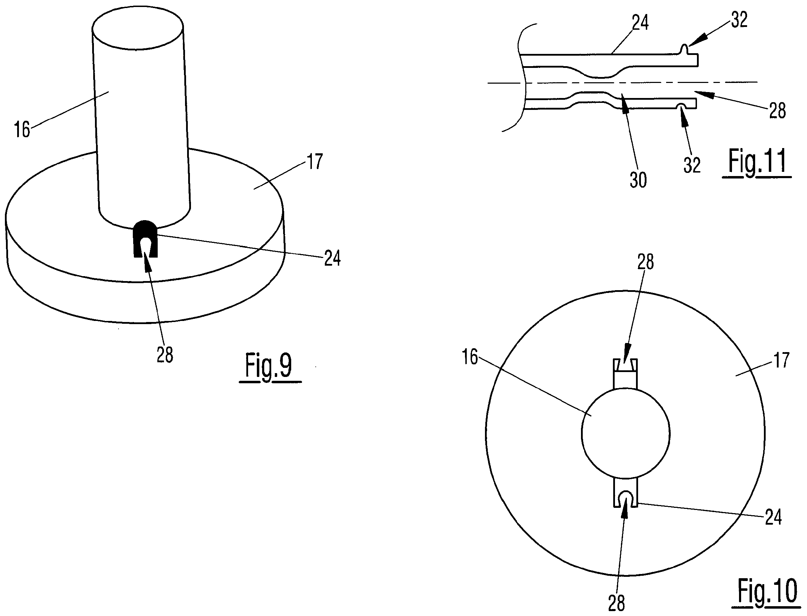

Die Fig. 9 und 10 zeigen vergleichsweise kurze Kanäle 24 mit einem von einer Halbkreisform abweichenden Querschnitt. Hier ist deren Querschnittsform in etwa hufeisenförmig.

Um eine viskositätsabhängige Durchlässigkeit der Kanäle 24 zu erzeugen, können diese - zusätzlich oder alternativ - bei Bedarf auch Querschnittsvariationen aufweisen. In Fig. 11 ist beispielhaft eine lokale Verengung 30 gezeigt, die durch eine Einbuchtung der Kanalwand (untere Hälfte) bzw. eine Verdickung der Kanalwand (obere Hälfte) bewirkt wird.

Im Bereich der Öffnungen 28 das in Fig. 11 gezeigten Kanals 24 ist ein Anschlussabschnitt 32 vorgesehen, der die Befestigung eines externen Fluidsystems (nicht gezeigt) an den Kanal 24 ermöglicht, um in diesen Spülfluid einbringen zu können und/oder Spülfluid aus diesem absaugen zu können. Beispielhaft sind ein Wulst (obere Hälfte) und eine Nut (untere Hälfte) gezeigt. Andere Fixierungsmittel, zusätzlich oder alternativ auch im Inneren des Kanals 24, können bedarfsgerecht vorgesehen sein. Auch eine Art "Einführtrichter" kann in dem Abschnitt 32 vorgesehen sein, der ein fluidsystemseitiges Anschlusselement aufnimmt.

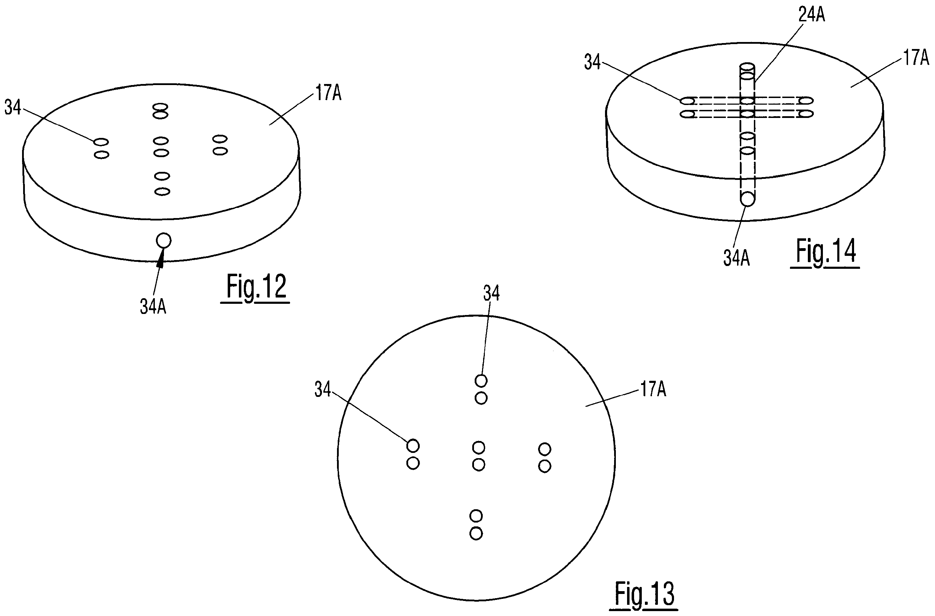

Fig. 12 bis 14 zeigen ein Basiselement 17A, das an seiner zu bedruckenden Oberfläche mit einer Mehrzahl von Öffnungen 34 versehen ist. Außerdem ist an der Umfangsfläche des Basiselements 17A eine Öffnung 34A vorgesehen. Wie in Fig. 14 durch gestrichelte Linien angedeutet ist, stehen die Öffnungen 34, 34A durch Kanäle 24A miteinander in Verbindung. Wird nun ein Zylinder 16 mit einem Hohlraum 18 auf die Oberfläche des Elements 17A gedruckt, so ergibt sich - bei geeigneter Verteilung der Öffnungen 34 - automatisch zumindest eine Verbindung zwischen dem Hohlraum 18 und der Umgebung, nämlich zumindest über die Öffnung 34A und/oder eine andere Öffnung 34. Für den jeweils konkreten Fall nicht benötigte Öffnungen 34 können durch geeignete Elemente, z.B. Pfropfen oder Stöpsel, verschlossen werden. Das Bohrung- und/oder Kanalmuster kann beliebig angepasst werden. Das Basiselement 17A bietet eine große Flexibilität, da es bei der Herstellung der unterschiedlichsten Bauteile eingesetzt werden kann. Ein Basiselement, dass das anhand des Basiselements 17A beispielhaft erläuterte Konzept realisiert, kann mit gedruckten Kanälen 24 und/oder separaten Kanalbauteilen kombiniert werden.

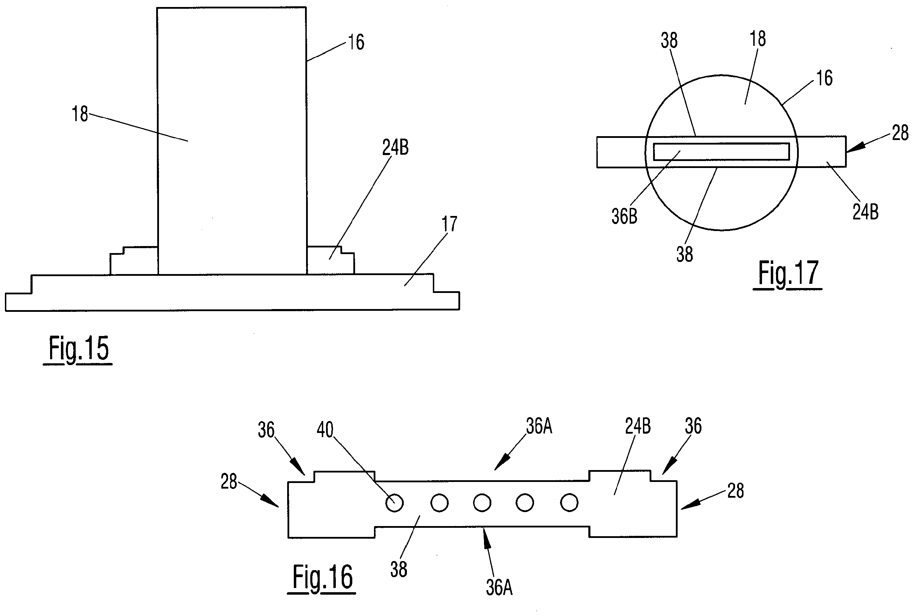

Eine Variante eines separaten Kanalbauteils ist anhand der Fig. 15 bis 17 gezeigt. Ein separates Kanalbauteil 24B ist in dem gezeigten Beispiel von in wesentlichem rohrförmiger Bauweise (siehe Fig. 16). Die nicht mit dem Hohlraum 18 des Zylinders 16 in Verbindung stehenden Enden des Bauteils 24B weisen an ihrer Oberseite jeweils eine Ausnehmung 36 auf, die die Eintrittsöffnung 28 vergrößern. Diese Maßnahme kann bei der Verwendung vergleichsweise hochviskoser Fluide von Vorteil sein. Wie in Fig. 17 zu sehen ist (Ansicht von unten), erstreckt sich das Bauteil 24B durch den Zylinder 16 hindurch. Dadurch verleiht es dem Zylinder 16 zusätzliche Stabilität. Um jedoch das Ausfließen von Fluid aus dem Hohlraum 18 möglichst wenig zu stören, ist das Bauteil 24B an seiner Oberseite und seiner Unterseite mit Ausnehmungen 36A versehen. Außerdem weisen Seitenwandabschnitte 38 des Bauteils 24B, die sich im Inneren des Zylinders 16 befinden, Öffnungen 40 auf. Die Ausnehmungen 36A und die Öffnungen 40A erleichtern das Eindringen von Fluiden in das Innere des Bauteils 24B, ohne dessen stabilisierende Wirkung übermäßig herabzusetzen. Das Bauteil 24B kann - wie bereits erwähnt - ein separates Bauteil sein, das aus dem gleichen Material wie das herzustellende Bauteil/Modell besteht. Insbesondere kann es separat gedruckt werden. Es ist jedoch auch möglich, ein anderes Material zu verwenden. Gemäß einer alternativen Ausführungsform der Erfindung wird das Bauteil 24B zusammen mit dem herzustellenden Bauteil/Modell gedruckt.

Der Hohlraum 18 kann - zusätzlich oder alternativ - (weitere) stabilisierende oder stützende Elemente aufweisen, um sicherzustellen, dass der Zylinder 16 über den Herstellungsprozess hinweg seine Form behält. Solche Elemente können beispielsweise Rippen oder Stege sein, die an der Innenwand des Hohlraums 18 angeordnet sind und/oder sich durch diesen erstrecken. Optional können auch Leitelemente vorgesehen sein, die die Fluide im Inneren des Hohlraums 18 so leiten, dass dieser effizient gespült und/oder getrocknet werden kann. Die Leitelemente können gleichzeitig auch eine stabilisierende oder stützende Wirkung aufweisen. Analoges gilt für die stabilisierenden und stützenden Elemente.

Das Erfindungskonzept wurde vorstehend beispielhaft anhand des Hohlraums 18 im Inneren eines Hohlzylinders 16 beschrieben. Es versteht sich jedoch, dass dieses Konzept grundsätzlich auf beliebig geformte Hohlräume oder Bauteile/Modelle angewendet werden kann. Bei einem Hohlraum im Sinne der vorliegenden Offenbarung muss es sich nicht zwingend um einen abgeschlossenen Raum handeln. Dieser kann auch teilweise offen sein und/oder durch eine Hinterschneidung gebildet sein.

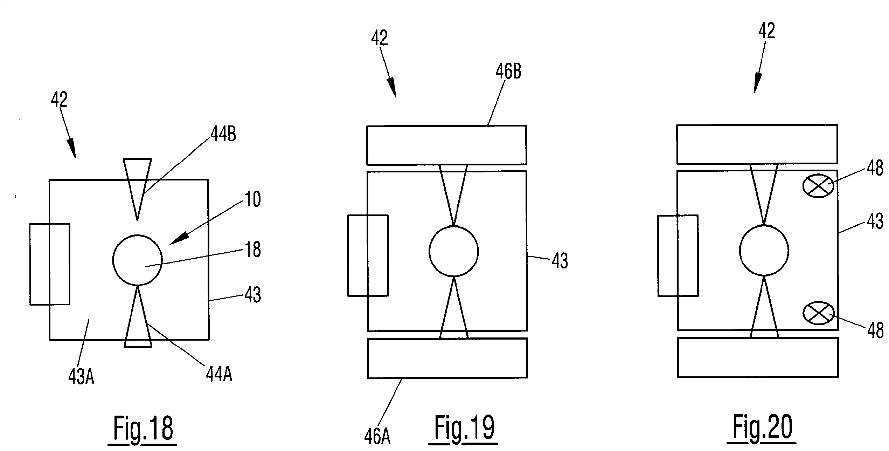

Die Fig. 18 bis 20 zeigen ein erfindungsgemäßes System 42, das eine Spülvorrichtung 43 mit einer Spülkammer 43A umfasst. Das Modell 10 wird - noch auf dem Basiselement 17, 17A angeordnet oder nicht - in die Kammer 43A eingebracht.

Bevorzugt wird dieses System mit einer Vorrichtung zum Drucken eines Bauteils in einem Flüssigkeitsbad kombiniert.

Fig. 18 zeigt schematisch, dass in einem ersten Schritt die Öffnungen 28 der Kanäle 24 (nicht gezeigt) mit Fluidsystemanschlüssen 44A, 44B eines Fluidsystems verbunden werden, um den Hohlraum 18 des Modells 10 zu spülen zu können. Dieser Schritt kann manuell, semiautomatisch oder automatisch geschehen. Dies gilt auch für die nachfolgend beschriebenen Schritte. Insbesondere ist eine Steuereinrichtung vorgesehen, die das System steuert und dem Bediener geeignete Steuerprogramme vorschlägt oder diese sogar (teilweise) erstellt, z.B. auf Basis externen, eingegebener oder mittels Sensoren ermittelter Daten. Diese Daten können beispielsweise auf dem digitalen Modell des zu erzeugenden Bauteils basieren.

Das Basiselement 17, 17A ist bevorzugt mechanisch kodiert und/oder markiert, um es stets in einer fest definierten Lage in der Kammer 43A fixieren zu können. Die erleichtert die Automatisierung des Prozesses.

Durch den Anschluss 44A wird Spülfluid (insbesondere gesättigter Alkoholdampf) aus einem Spülmittelreservoir 46A in den Hohlraum 18 eingebracht. Der Anschluss 44B dient zur Entnahme des Spülfluids, das in ein Spülmittelreservoir 46B geleitet wird. Das Spülmittel kann dann entsorgt oder wiederaufbereitet werden. Zusätzlich können Spül- oder Reinigungseinrichtungen vorgesehen sein, mit denen das Äußere des Modells 10 gespült bzw. gereinigt werden kann. Insbesondere sind entsprechende Spülmitteldüsen vorgesehen, die jedoch nicht gezeigt sind.

Das Spülfluid kann eine beliebige geeignete Flüssigkeit und/oder ein beliebiges geeignetes Gas/Gasgemisch sein.

Das Fluidsystem kann auch zur Trocknung verwendet werden, indem ein trockenes und bei Bedarf erwärmtes Gas/Gasgemisch durch den Hohlraum 18 geleitet wird. Der Spülprozess und/oder der Trocknungsprozess können jeweils mehrere Spül- bzw. Trocknungsschritte umfassen.

Im vorliegenden Ausführungsbeispiel weist die Spülvorrichtung 43 auch eine Aushärtevorrichtung 48 auf (beispielsweise UV-Strahler), mit der das Modell nach dem Spülen und/oder Trocknen ausgehärtet werden kann. Die Spülvorrichtung 43 vereint somit die Funktionalität einer Spülvorrichtung, einer Trocknungsvorrichtung und einer Aushärtevorrichtung. Grundsätzlich ist es auch möglich, diese Funktionalitäten mit separaten Einheiten zu realisieren.

### Bezugszeichenliste

- 10: Modell
- 12: Zahnersatzkomponente
- 14: Steg
- 16: Hohlzylinder
- 17, 17A: Basiselement
- 18: Hohlraum
- 20: Einbettmittel
- 22: Gehäusezylinder
- 24, 24A, 24B: Kanal
- 26: Biegung
- 28: Öffnung
- 30: Verengung
- 32: Anschlussabschnitt
- 34, 34A: Öffnung
- 36: Ausnehmung
- 38: Seitenwandabschnitt
- 40: Öffnung
- 42: System
- 43: Spülvorrichtung
- 43A: Spülkammer
- 44A, 44B: Fluidsystemanschluss
- 46A, 46B: Spülmittelreservoir
- 48: Aushärtevorrichtung

## Patentansprüche

1. Verfahren zur Herstellung eines Bauteils (10, 16), insbesondere eines Bauteils, das bei der Herstellung von Dentalbauteilen zum Einsatz gelangt oder eines Dentalbauteils, mit Hilfe eines dreidimensionalen Druckverfahrens mit den Schritten:
- Bereitstellen eines Basiselements (17, 17A),
- Drucken des Bauteils in einem Flüssigkeitsbad auf dem Basiselement derart, dass das Bauteil nach einem Abschluss des Druckens einen Hohlraum (18) aufweist,
wobei zumindest zwei Kanäle (24, 24A, 24B, 34, 34A) vorgesehen sind, die mit dem Hohlraum in Fluidverbindung stehen und zumindest nach dem Abschluss des Druckens eine Fluidverbindung zwischen dem Hohlraum und der Umgebung herstellen, und wobei durch zumindest einen der Kanäle eine Spülflüssigkeit und/oder ein Spülgas in den Hohlraum eingebracht wird, insbesondere wobei das Bauteil nach dem Spülen getrocknet wird, **dadurch gekennzeichnet, dass**
die Kanäle in Umfangsrichtung des Bauteils verteilt, bevorzugt relativ zu dem Bauteil einander gegenüberliegend angeordnet sind

2. Verfahren nach Anspruch 1,
**dadurch gekennzeichnet, dass**
zumindest einer der Kanäle (24, 24A, 24B, 34, 34A) zumindest abschnittsweise durch das Basiselement (17, 17A) begrenzt und/oder dass der Hohlraum (18) nach dem Abschluss des Druckens zumindest abschnittsweise durch das Basiselement begrenzt ist.

3. Verfahren nach Anspruch 1 oder 2,
**dadurch gekennzeichnet, dass**
zumindest einer der Kanäle (34, 34A) zumindest abschnittsweise in das Basiselement (17A) integriert sind, insbesondere zumindest abschnittsweise einstückig mit diesem ausgebildet sind.

4. Verfahren nach zumindest einem der Ansprüche 1 bis 3,
**dadurch gekennzeichnet, dass**
zumindest einer der Kanäle (24, 24A, 24B, 34, 34A) zumindest teilweise, bevorzugt vollständig bei dem Drucken des Bauteils (10, 16) erzeugt wird, insbesondere durch den Druckprozess.

5. Verfahren nach zumindest einem der Ansprüche 1 bis 4,
**dadurch gekennzeichnet, dass**
zumindest einer der Kanäle (24) zumindest einen gewundenen, gekrümmten und/oder schräg zu einer Längsachse des Kanals verlaufenden Abschnitt aufweist und/oder ein Querschnitt zumindest eines der Kanäle lokal variiert.

6. Verfahren nach zumindest einem der Ansprüche 1 bis 5,
**dadurch gekennzeichnet, dass**
ein dem Hohlraum (18) abgewandtes Ende zumindest einer der Kanäle (24) eine Schnittstelle (32) zur Verbindung des Kanals mit einem separaten Fluidsystem (46A, 46B) aufweist, insbesondere wobei die Schnittstelle durch den Druckprozess erzeugt wird.

7. Verfahren nach zumindest einem der Ansprüche 1 bis 6,
**dadurch gekennzeichnet, dass**
im Inneren des Hohlraums (18) zumindest eine Stützstruktur zur Erhöhung der Stabilität des Bauteils (10, 16) und/oder zumindest eine Leitstruktur zum selektiven Leiten von Fluid vorgesehen sind, insbesondere wobei die Stützstruktur und/oder die Leitstruktur bei dem und/oder durch das Drucken des Bauteils erzeugt werden, insbesondere wobei die Stützstruktur und/oder die Leitstruktur mit dem Kanal in Verbindung stehen.

8. Verfahren nach zumindest einem der Ansprüche 1 bis 7,
**dadurch gekennzeichnet, dass**
nach dem Drucken in dem Hohlraum (18) vorhandene Flüssigkeit des Flüssigkeitsbads durch zumindest einen der Kanäle (24, 24A, 24B, 34, 34A) entfernt wird.

9. Verfahren nach zumindest einem der Ansprüche 1 bis 8,
**dadurch gekennzeichnet, dass**
das Bauteil (10, 16) nach einem Entfernen der Flüssigkeit aus dem Hohlraum (18) und/oder nach dem Spülen des Hohlraums gehärtet wird, insbesondere mittels Strahlung und/oder Wärmeeintrag.

10. System (42) mit Mitteln, die so angepasst sind, dass sie die Schritte des Verfahrens nach Anspruch 1 ausführen.

11. System (42) mit einer Spülvorrichtung (43) zum Spülen eines gemäß einem Verfahren nach einem der vorstehenden Ansprüche hergestellten Bauteils, nach Anspruch 10,
wobei die Spülvorrichtung eine Spüleinrichtung (44A, 44B) aufweist, die mit zumindest einem der Kanäle (24, 24A, 24B, 34, 34A) des Bauteils (10, 16) koppelbar ist und mit der eine Spülflüssigkeit und/oder ein Spülgas in den Hohlraum (18) einbringbar ist, insbesondere wobei die Spülflüssigkeit und/oder das Spülgas druckbeaufschlagt in den Hohlraum einbringbar sind.

12. System nach Anspruch 11,
**dadurch gekennzeichnet, dass**
die Spülvorrichtung (43) eine Spülkammer (43A) umfasst, in der das Bauteil (10, 16) anordbar ist, wobei die Spülkammer zumindest ein Spülelement, insbesondere eine Düse, zur Beaufschlagung des Bauteils mit einer Spülflüssigkeit und/oder mit einem Spülgas aufweist.

13. System nach Anspruch 10, 11 oder 12,
**dadurch gekennzeichnet, dass**
eine Trocknungsvorrichtung zum Trocknen des Bauteils vorgesehen ist, insbesondere wobei die Trocknungsvorrichtung in die Spülvorrichtung integriert ist.

14. System nach zumindest einem der Ansprüche 10 bis 13,
**dadurch gekennzeichnet, dass**
eine Aushärtevorrichtung (48) zum Härten des Bauteils (10, 16) vorgesehen ist, insbesondere wobei die Aushärtevorrichtung in die Spülvorrichtung (43) oder die Trocknungsvorrichtung integriert ist.

15. System nach zumindest einem der Ansprüche 10 bis 14,
**dadurch gekennzeichnet, dass**
eine Fixierungsvorrichtung zum lagegenauen Fixieren des Basiselements 17, 17A) in der Druckvorrichtung, der Spülvorrichtung (43), der Trocknungsvorrichtung und/oder der Aushärtevorrichtung vorgesehen ist.

## Claims

1. A method of manufacturing a component (10, 16), in particular a component that is used in the manufacture of dental components or a dental component, by means of a three-dimensional printing process, said method comprising the steps:
- providing a base element (17, 17A); and
- printing the component in a liquid bath on the base element such that the component has a hollow space (18) after a completion of the printing,
wherein at least two channels (24, 24A, 24B, 34, 34A) are provided which are in fluid communication with the hollow space and establish a fluid connection between the hollow space and the environment at least after the completion of the printing, and wherein a flushing liquid and/or a flushing gas is/are introduced into the hollow space through at least one of the channels, in particular wherein the component is dried after the flushing,
**characterized in that**
the channels are distributed in a peripheral direction of the component, preferably arranged disposed opposite one another relative to the component.

2. A method in accordance with claim 1,
**characterized in that**
at least one of the channels (24, 24A, 24B, 34, 34A) is at least sectionally bounded by the base element (17, 17A); and/or **in that** the hollow space (18) is at least sectionally bounded by the base element after the completion of the printing.

3. A method in accordance with claim 1 or claim 2,
**characterized in that**
at least one of the channels (34, 34A) is at least sectionally integrated into the base element (17A) and is in particular at least sectionally formed in one piece therewith.

4. A method in accordance with any one of the claims 1 to 3,
**characterized in that**
at least one of the channels (24, 24A, 24B, 34, 34A) is at least partly produced, preferably completely produced on the printing of the component (10, 16), in particular by the printing process.

5. A method in accordance with at least one of the claims 1 to 4,
**characterized in that**
at least one of the channels (24) has at least one wound section, one curved section and/or one section extending obliquely to a longitudinal axis of the channel and/or a cross-section of at least one of the channels varies locally.

6. A method in accordance with at least one of the claims 1 to 5,
**characterized in that**
an end of at least one of the channels (24) remote from the hollow space (18) has an interface (32) for connecting the channel to a separate fluid system (46A, 46B), in particular with the interface being produced by the printing process.

7. A method in accordance with at least one of the claims 1 to 6,
**characterized in that**
at least one support structure for increasing the stability of the component (10, 16) and/or at least one guidance structure for selectively guiding fluid is/are provided in the interior of the hollow space (18), in particular with the support structure and/or the guidance structure being produced on the and/or by the printing of the component, in particular with the support structure and/or the guidance structure being in connection with the channel.

8. A method in accordance with at least one of the claims 1 to 7,
**characterized in that**
liquid of the liquid bath present in the hollow space (18) is removed through at least one of the channels (24, 24A, 24B, 34, 34A) after the printing.

9. A method in accordance with at least one of the claims 1 to 8,
**characterized in that**
the component (10, 16) is hardened after a removal of the liquid from the hollow space (18) and/or after the flushing of the hollow space, in particular by means of radiation and/or heat input.

10. A system (42) comprising means which are adapted such that they perform the steps of the method in accordance with claim 1.

11. A system (42) comprising a flushing apparatus (43) for flushing a
component in accordance with claim 10 manufactured in accordance with a method in accordance with any one of the preceding claims,
wherein the flushing apparatus has a flushing device (44A, 44B) which can be coupled to at least one of the channels (24, 24A, 24B, 34, 34A) of the component (10, 16) and by which a flushing liquid and/or a flushing gas can be introduced into the hollow space (18), in particular wherein the flushing liquid and/or the flushing gas can be introduced pressurized into the hollow space.

12. A system in accordance with claim 11,
**characterized in that**
the flushing apparatus (43) comprises a flushing chamber (43A) in which the component (10, 16) can be arranged, with the flushing chamber having at least one flushing element, in particular a nozzle, for applying a flushing liquid and/or a flushing gas to the component.

13. A system in accordance with claim 10, claim 11, or claim 12,
**characterized in that**
a drying apparatus for drying the component is provided, in particular with the drying apparatus being integrated into the flushing apparatus.

14. A system in accordance with at least one of the claims 10 to 13,
**characterized in that**
a hardening apparatus (48) for hardening the component (10, 16) is provided, in particular with the hardening apparatus being integrated into the flushing apparatus (43) or the drying apparatus.

15. A system in accordance with at least one of the claims 10 to 14,
**characterized in that**
a fixing apparatus for a positionally accurate fixing of the base element (17, 17A) in the printing apparatus, in the flushing apparatus (43), in the drying apparatus and/or in the hardening apparatus is provided.

## Revendications

1. Procédé de fabrication d'un composant (10, 16), en particulier d'un composant utilisé pour fabriquer des composants dentaires, ou d'un composant dentaire, à l'aide d'un procédé d'impression en trois dimensions, comprenant les étapes consistant à :
- fournir un élément de base (17, 17A),
- imprimer le composant dans un bain de liquide sur l'élément de base de telle sorte que le composant présente une cavité (18) à la fin de l'impression,
dans lequel il est prévu au moins deux canaux (24, 24A, 24B, 34, 34A) qui sont en communication fluidique avec la cavité et qui, au moins à la fin de l'impression, établissent une communication fluidique entre la cavité et l'environnement, et
un liquide de rinçage et/ou un gaz de rinçage est introduit dans la cavité à travers l'un au moins des canaux,
en particulier, le composant est séché après le rinçage,
**caractérisé en ce que**
les canaux sont disposés en étant répartis en direction périphérique du composant, de préférence disposés à l'opposé l'un de l'autre par rapport au composant.

2. Procédé selon la revendication 1,
**caractérisé en ce que**
l'un au moins des canaux (24, 24A, 24B, 34, 34A) est délimité au moins localement par l'élément de base (17, 17A), et/ou
**en ce que** la cavité (18) est délimitée au moins localement par l'élément de base, à la fin de l'impression.

3. Procédé selon la revendication 1 ou 2,
**caractérisé en ce que**
l'un au moins des canaux (34, 34A) est intégré au moins localement dans l'élément de base (17A), en particulier réalisé au moins localement d'un seul tenant avec celui-ci.

4. Procédé selon l'une au moins des revendications 1 à 3,
**caractérisé en ce que**
l'un au moins des canaux (24, 24A, 24B, 34, 34A) est créé au moins partiellement, de préférence entièrement, lors de l'impression du composant (10, 16), en particulier par le processus d'impression.

5. Procédé selon l'une au moins des revendications 1 à 4,
**caractérisé en ce que**
l'un au moins des canaux (24) comporte au moins une portion sinueuse, incurvée et/ou oblique par rapport à un axe longitudinal du canal, et/ou
une section transversale de l'un au moins des canaux varie localement.

6. Procédé selon l'une au moins des revendications 1 à 5,
**caractérisé en ce que**
une extrémité de l'un au moins des canaux (24) détournée de la cavité présente une interface (32) pour relier le canal à un système fluidique séparé (46A, 46B), en particulier l'interface étant créée par le processus d'impression.

7. Procédé selon l'une au moins des revendications 1 à 6,
**caractérisé en ce que**
à l'intérieur de la cavité (18), il est prévu au moins une structure de soutien destinée à augmenter la stabilité du composant (10, 16) et/ou au moins une structure de guidage destinée à guider sélectivement le fluide, en particulier la structure de soutien et/ou la structure de guidage étant créées lors de et/ou par l'impression du composant, en particulier, la structure de soutien et/ou la structure de guidage étant en communication avec le canal.

8. Procédé selon l'une au moins des revendications 1 à 7,
**caractérisé en ce que**
après l'impression, le liquide du bain de liquide présent dans la cavité (18) est éliminé à travers l'un au moins des canaux (24, 24A, 24B, 34, 34A).

9. Procédé selon l'une au moins des revendications 1 à 8,
**caractérisé en ce que**
le composant (10, 16) est durci, en particulier par rayonnement et/ou par apport de chaleur, après élimination du liquide hors de la cavité (18) et/ou après rinçage de la cavité.

10. Système (42) comprenant des moyens adaptés pour mettre en oeuvre les étapes du procédé selon la revendication 1.

11. Système (42) selon la revendication 10, comprenant un dispositif de rinçage (43) pour rincer un composant fabriqué par un procédé selon l'une des revendications précédentes,
dans lequel
le dispositif de rinçage comprend un organe de rinçage (44A, 44b) qui peut être couplé à l'un au moins des canaux (24, 24A, 24B, 34, 34A) du composant (10, 16) et qui permet d'introduire un liquide de rinçage et/ou un gaz de rinçage dans la cavité (18), en particulier le liquide de rinçage et/ou le gaz de rinçage pouvant être introduits dans la cavité en étant soumis à une pression.

12. Système selon la revendication 11,
**caractérisé en ce que**
le dispositif de rinçage (43) comprend une chambre de rinçage (43A) dans laquelle le composant (10, 16) peut être agencé, la chambre de rinçage présentant au moins un élément de rinçage, en particulier une buse, pour solliciter le composant avec un liquide de rinçage et/ou avec un gaz de rinçage.

13. Système selon la revendication 10, 11 ou 12,
**caractérisé en ce que**
il est prévu un dispositif de séchage destiné à sécher le composant, en particulier le dispositif de séchage étant intégré dans le dispositif de rinçage.

14. Système selon l'une au moins des revendications 10 à 13,
**caractérisé en ce que**
il est prévu un dispositif de durcissement (48) destiné à faire durcir le composant (10, 16), en particulier le dispositif de durcissement étant intégré dans le dispositif de rinçage (43) ou dans le dispositif de séchage.

15. Système selon l'une au moins des revendications 10 à 14,
**caractérisé en ce que**
il est prévu un dispositif de fixation destiné à fixer l'élément de base (17, 17A) en position exacte dans le dispositif d'impression, dans le dispositif de rinçage (43), dans le dispositif de séchage et/ou dans le dispositif de durcissement.
